Europäisches Patentamt

European Patent Office

Office européen des brevets

(11) Veröffentlichungsnummer: **0 223 019 B1**

(12) **EUROPÄISCHE PATENTSCHRIFT**

(45) Veröffentlichungstag der Patentschrift:
22.03.89

(51) Int. Cl.⁴: **C08L 23/08, C08L 95/00**

(21) Anmeldenummer: **86113452.6**

(22) Anmeldetag: **01.10.86**

(54) **Thermoplastische Formmassen auf Basis von Bitumen-Ethylenpolymerisat-Mischungen und deren Verwendung zur Herstellung von Formkörpern, insbesondere von Abdichtungsbahnen für den Hoch- und Tiefbau.**

(30) Priorität: **04.10.85 DE 3535467**

(43) Veröffentlichungstag der Anmeldung:
**27.05.87 Patentblatt 87/22**

(45) Bekanntmachung des Hinweises auf die Patenterteilung:
**22.03.89 Patentblatt 89/12**

(84) Benannte Vertragsstaaten:
**AT BE CH DE ES FR GB IT LI NL SE**

(56) Entgegenhaltungen:
**EP-A- 0 130 367**
**FR-A- 2 228 817**
**FR-A- 2 288 126**
**US-A- 3 790 519**

(73) Patentinhaber: **BASF Aktiengesellschaft,
Carl-Bosch-Strasse 38, D-6700 Ludwigshafen(DE)**

(72) Erfinder: **Koehnlein, Ernst, Dr., Ungsteiner Strasse 4,
D-6700 Ludwigshafen(DE)**
Erfinder: **Bauer, Peter, Erich-Kaestner-Strasse 13,
D-6700 Ludwigshafen(DE)**
Erfinder: **Hausz, Alfred Friedrich, Dr., Osloer Weg 6,
D-6700 Ludwigshafen(DE)**

**Beschreibung**

Die Erfindung betrifft thermoplastische Formmassen auf Basis von Mischungen aus (A) 20 bis 50 Gew.-Teilen Bitumen, das entsprechend DIN 1995 eine Penetration bei 25°C von 3 bis 100 aufweist, (B) 40 bis 70 Gew.-Teilen eines Ethylenpolymerisats, (C) 0 bis 5 Gew.-Teilen Ruß, (D) 0 bis 5 Gew.-Teilen Glycerinmonostearat und (E) 0 bis 30 Gew.-Teilen üblicher Füllstoffe.

Derartige Formmassen sind zur Herstellung von Formkörpern, insbesondere Abdichtungsbahnen für den Hoch- und Tiefbau geeignet.

Stoffmischungen auf Basis von Ethylenpolymerisaten und Bitumen sind aus der Literatur wohl bekannt (vgl. DE-A 2 033 300, DE-C 1 298 282, DE-C 1 807 071 oder EP-A 130 367).

Es ist weiterhin bekannt, obige Formmassen mit Ruß, üblichen mineralischen Füllstoffen und/oder Glycerinmonostearat auszurüsten (vgl. EP-A 130 367). Bekannt ist weiterhin, die mechanische Festigkeit der Bitumenmischung durch Zusätze von Polyethylen der Dichte 0,918 bis 0,935 g/cm³ in einem gewissen Ausmaß zu erhöhen (vgl. DE-A 1 948 526, DE-A 3 117 672, DE-A 2 304 004 oder DE-A 2 112 355). Durch Zusätze von Polyethylen der Dichte 0,935 bis 0,960 g/cm³ kann die Festigkeit und Wärmeformbeständigkeit erhöht werden, gleichzeitig werden die Formkörper aber im unerwünschten Ausmaß steifer. Insbesondere bei Abdichtungsbahnen ist eine hohe Steifigkeit aber unerwünscht, da die Handhabung steifer Bahnen bei der Verlegung erschwert ist.

Der Erfindung lag die Aufgabe zugrunde, eine thermoplastische Formmasse auf Basis von Bitumen und möglichst geringen Mengen Ethylenpolymerisaten zu entwickeln, die eine hohe Festigkeit bei Raumteperatur und eine hohe Wärmeformbeständigkeit aufweist. Die Steifigkeit des Materials soll bei Raumtemperatur niedrig gehalten werden und ihr Temperaturverlauf sollte möglichst flach sein, d.h. im Bereich hoher Temperaturen sollte noch ein möglichst hoher Torsionsmodul vorhanden sein bzw. die Temperatur, bei welcher der Torsionsmodul auf den Wert $G = 1$ N/mm² abgesunken ist, sollte möglichst hoch liegen, wobei die Mitverwendung eines relativ teuren Ethylen-Vinylester- oder Ethylen-Acrylsäureester-Copolymerisats im Bitumen gemäß EP-A 130 367 vermieden werden soll.

Diese Aufgabe wird erfindungsgemäß dadurch gelöst, daß man in den eingangs beschriebenen Mischungen als Ethylenpolymerisat (B) ein Copolymerisat aus 97 bis 80 Gew.-% Ethylen und 3 bis 20 Gew.-% eines C₄- bis C₁₀-α-Olefins verwendet, wobei die Dichte 0,90 bis 0,93 g/cm³ und die Kristallitschmelztemperatur 115 bis 125°C beträgt.

Unter thermoplastischer Formmasse werden ungeformte oder vorgeformte Stoffe verstanden, die durch spanloses Formen innerhalb bestimmter Temperaturbereiche zu Formkörpern oder Halbzeug verarbeitet werden können. Ihr typisches Kennzeichen besteht darin, daß sie bei Erhöhung der Temperatur nach Überschreitung ihres Erweichungspunktes weich werden und bei Abkühlung wieder erhärten.

Bitumen sind die in der DIN 55 946 definierten, bei schonender Aufarbeitung von Erdölen gewonnenen dunkelfarbigen, halbfesten bis springharten, schmelzbaren hochmolekularen Kohlenwasserstoffgemische. Die in der Mischung als Komponente (B) verwendeten Bitumen haben nach DIN 1995 eine Penetration bei 25°C von 3 bis 100 und einen Erweichungspunkt (Ring und Kugel) von 40 bis 140°C. Es können alle handelsüblichen natürlichen und synthetischen Bitumensorten verwendet werden. Besonders geeignet ist als Bitumenkomponente (B) ein Extraktions- und/oder Fällungsbitumen, das entsprechend DIN 1955 eine Penetration bei 25°C von 3 bis 10 und einen Erweichungspunkt nach DIN 1995 (Ring und Kugel) zwischen 40 und 110°C aufweist. Unter Extraktions- und/oder Fällungsbitumen werden ölarme Bitumensorten verstanden, die entsprechend stark spröde und hart sind und nur eine geringe Penetration aufweisen. Eine genauere Definition obiger Bitumensorten ist in der DE-C 2 441 203 oder der US-A 3 980 598 enthalten. Besonders geeignet ist ein Fällungsbitumen mit einer Penetration von 8 bei 25°C und einem Erweichungspunkt von 64°C.

Die Mischungen enthalten gegebenenfalls noch bis zu 5 Gew.-Teile der Mischungskomponente Ruß, Glycerinmonostearat und/oder bis zu 30 Gew.-Teile übliche Füllstoffe. Diese Komponenten sind so bekannt, daß sich nähere Erläuterungen erübrigen. Das Glycerinmonostearat dient zur Verbesserung der Verarbeitungseigenschaften, als Füllstoffe sind insbesondere Aluminiumoxidhydrat, Schiefermehl, Kreide, Glasfasern, Kieselgur ect. geeignet, bevorzugt in Mengen von 2 bis 25 Gew.-Teilen.

Die Herstellung der Formmassen kann auf übliche Weise erfolgen, z.B. durch Homogenisierung der Bestandteile mittels Kneter, Rührwerken, Walzwerken oder Extrudern bei Arbeitstemperaturen von 140 bis 250°C. Es spielt keine Rolle, an welcher Stelle des Mischungsvorgangs die Zugabe des Ethylenpolymerisats (B) oder der anderen Komponenten erfolgt.

Erfindungsgemäß wird der oben beschriebenen Mischung ein Ethylencopolymerisat (B) zugesetzt, das aus 97 bis 80 Gew.-% Ethylen und 3 bis 20 Gew.-% eines C₄- bis C₁₀-α-Olefins besteht, wobei die Summe der Prozentzahlen stets 100 ist. Die Ethylencopolymerisate (B) sind wohlbekannt und unter der Bezeichnung VLDPE (= very low density polyethylene) im Handel erhältlich (vgl. UCAR®-FLX-Resins "DFDA-1137 Natural 7" und "DFDA-1138 Natural" der Union Carbide Corp., USA). Die erfindungsgemäß zu verwendenden Ethylencopolymerisate (B) enthalten als Comonomer bevorzugt Buten-1, Hexen-1 oder Octen-1, sie weisen einen Schmelzindex von 0,1 bis 10, bevorzugt 0,4 bis 2,0 g/10 min, gemessen nach ASTM D 138-65 T bei 190°C und 2,16 kg Auflagegewicht, eine Dichte nach DIN 53 479 von 0,89 bis 0,93, bevorzugt 0,90 bis 0,91 und eine Kristallitschmelztemperatur, bestimmt nach ASTMD 3418-82 mit Differential Scanning Calorimetry (DSC) von 115 bis 125 bevorzugt 116 bis 120°C auf. Die Copolymerisate (B) werden durch Niederdruckcopolymerisation in Gegenwart eines Ziegler-Natta-Katalysators erhalten (vgl. EP-A 4 645 und 4 647).

Die mit der Erfindung erzielten Vorteile sind insbesondere darin zu sehen, daß durch den Einsatz des Ethylencopolymerisates (B) als Mischungskomponenten mit Bitumen eine bituminöse Formmasse erhalten wird, die zu Formkörpern mit verbesserten mechanischen Eigenschaften in bezug auf Festigkeit bei Raumtemperatur, Wärmeformbeständigkeit und Steifigkeit verarbeitbar ist, wobei geringere Mengen Ethylencopolymerisat ausreichen.

Die erhaltenen Formmassen dienen insbesondere zur Herstellung von Abdichtungsbahnen für den Hoch- und Tiefbau. Die Bahnen können in einem weiteren Temperaturbereich hohe Schub- und Zugkräfte sowie starke Deformationen aufnehmen.

In den Beispielen wird die Festigkeit bei Raumtemperatur im Zugversuch nach DIN 53 455 geprüft. Als Maß für die Steifigkeit dient der Torsionsmodul (G), der im Torsionsschwingungsversuch nach DIN 53 445 gemessen wird. Die Wärmeformbeständigkeit wird a) als Zugversuch nach DIN 53 455 und b) als Schubmodul nach DIN 53 445 bei hohen Temperaturen geprüft, wobei unter hohen Temperaturen der Bereich oberhalb 70°C verstanden wird. Der Schmelzindex der verwendeten Polymerisate wurde nach ASTM D 138-65 T bei einer Temperatur von 190°C und einem Auflagegewicht von 2,16 kg, die Dichte nach DIN 53 479 gemessen.

Vergleichsbeispiele

1. Ethylen-n-Butylacrylat-Copolymerisat mit 18 Gew.-% n-Butylacrylat und einem Schmelzindex von 1,5 g/10 min wird mit Fällungsbitumen, das einen Erweichungspunkt (Ring und Kugel) von 64°C und eine Penetration nach DIN 1995 von 8 hat in gleichen Teilen im Kneter gemischt (vgl. DE-C-1 298 282 und 1 87 071). Aus der Mischung werden 2 mm dicke Platten gepreßt, daraus werden Probestreifen ausgestanzt und im Zugversuch gemessen. Außerdem wird der Torsionsmodul in Abhängigkeit von der Temperatur gemessen (vgl. Tab., Versuch 1).

2. Zu gleichen Teilen wurden gemischt ein Ethylen-Butylacrylat-Copolymerisat wie Beispiel 1, ein Fällungsbitumen wie in Beispiel 1 und ein Ethylen-Buten-1-Copolymerisat mit 10 Gew.-% Buten-1, einer Dichte von 0,920 g/cm³ und einem Schmelzindex von 1 g/10 min und einer Kristallitschmelztemperatur von 126°C, hergestellt im Niederdruckverfahren mit einem Ziegler-Natta-Katalysator (vgl. EP-A-130 367). Es zeigt sich, daß nach Versuch 2 eine Folie mit der höchsten Festigkeit und größter Dehnung bei Raumtemperatur (23°C) und bei 80°C und geringster Steifigkeit bei Raumtemperatur und eine hohe Temperatur, bei der die Torsionsnadel auf den Wert G = 1 N/mm² abgesunken ist, erhalten wird (vgl. Tab., Versuch 2)

Beispiel

1. Ein Ethylen-Buten-1-Copolymerisat mit 12 Gew.-% Buten-1, einer Dichte von 0,904 g/cm³, einem Schmelzindex von 1 g/10 min und einer Kristallitschmelztemperatur von 118°C wird wie bei Vergleichsbeispiel 1 mit Bitumen gemischt. Es ergeben sich die in der Tabelle, Versuch 3, aufgeführten Werte.

**Tabelle**

| Versuch | Reißfestigkeit N/mm² | | Reißdehnung % | | Torsionsmodul N/mm² | | | Temperatur °C bei G = 1 N/mm² |
|---|---|---|---|---|---|---|---|---|
| | 23°C | 80°C | 23°C | 80°C | 23°C | 70°C | 80°C | |
| 1 | 5 | 0,5 | 700 | 150 | 13 | 0,8 | — | 66 |
| 2 | 13 | 1,5 | 800 | 200 | 50 | 6 | 5 | 110 |
| 3 | 8 | 1,5 | 700 | 900 | 50 | 3 | 2 | 100 |

Mit der gleichen Menge am Ethylen-Buten-1-Copolymerisat sind die mechanischen Fertigkeitswerte nach Versuch 3 gegenüber Versuch 1 bei 23 und 80°C wesentlich erhöht. Gegenüber Versuch 2 wird erfindungsgemäß die mechanische Festigkeit bei 80°C erreicht und die Dehnbarkeit übertroffen, wobei aber der Anteil des Ethylencopolymerisats gegenüber 67 Gew.-% auf 50 Gew.-% reduziert ist.

**Patentansprüche**

1. Thermoplastische Formmassen auf der Basis von Mischungen aus (A) 20 bis 50 Gew.-Teilen Bitumen, das entsprechend DIN 1995 eine Penetration bei 25°C von 3 bis 100 aufweist, (B) 40 bis 70 Gew.-Teilen eines Ethylenpolymerisats, (C) 0 bis 5 Gew.-Teilen Ruß, (D) 0 bis 5 Gew.-Teilen Glycerinmonostearat und (E) 0 bis 30 Gew.-Teilen üblicher Füllstoffe, dadurch gekennzeichnet, daß das Ethylenpolymerisat (B) ein Copolymerisat aus 97 bis 80 Gew.-% Ethylen und 3 bis 20 Gew.-% eines $C_4$- bis $C_{10}$-α-Olefins ist, eine Dichte von 0,89 bis 0,93 g/cm³ und eine Kristallitschmelztemperatur von 115 bis 125°C aufweist.

2. Verwendung der Formmassen nach Anspruch 1 zur Herstellung von Abdichtungsbahnen für den Hoch- und Tiefbau.

**Claims**

1. A thermoplastic molding material based on a mixture of (A) from 20 to 50 parts by weight of asphalt which has a penetration at 25°C of from 3 to 100 according to DIN 1995, (B) from 40 to 70 parts by weight of an ethylene polymer, (C) from 0 to 5 parts by weight of carbon black, (D) from 0 to 5 parts by weight of glycerol monostearate and (E) from 0 to 30 parts by weight of a conventional filler, wherein the ethylene polymer (B) is a copolymer of from 97 to 80% by weight of ethylene and from 3 to 20% by weight of a $C_4$–$C_{10}$–$\alpha$-olefin and has a density of from 0.89 to 0.93 $g/cm^3$ and a crystallite melting point of from 115 to 125°C, the molding material containing no ethylene/vinyl ester or ethylene/acrylate copolymer.

2. Use of the thermoplastic molding material as claimed in claim 1 for the preparation of sealing sheets for building construction and civil engineering.

**Revendications**

1. Matières à mouler thermoplastiques à base de mélanges de (A) 20 à 50 parties en poids d'un bitume qui, à 25°C, possède une pénétration selon la norme DIN 1995 de 3 à 100, de (B) 40 à 70 parties en poids d'un polymère de l'éthylène, de (C) 0 à 5 parties en poids de suie, de (D) 0 à 5 parties en poids de monostéarate de glycérine et de (E) 0 à 30 parties en poids de matières de charge usuelles, caractérisées en ce que le polymère de l'éthylène (B) est un copolymère de 97 à 80% en poids d'éthylène et de 3 à 20% en poids d'une $\alpha$–oléfine en $C_4$ à $C_{10}$ et possède une masse volumique de 0,89 à 0,93 $g/cm^3$ et une température de fusion des cristallites comprise entre 115 et 125°C, la matière à mouler étant cependant exempte de copolymères d'éthylène et d'ester vinylique et(ou) d'ester d'acide acrylique.

2. Utilisation des matières à mouler suivant la revendication 1 pour la fabrication de bandes d'étanchéité pour bâtiments et constructions en sous-sol.